# EUROPEAN PATENT SPECIFICATION

(11) **EP 1 794 409 B1**
(45) Date of publication and mention of the grant of the patent: **20.02.2008**
(21) Application number: 05754097.3
(22) Date of filing: 23.06.2005
(51) Int. Cl.: E21B 23/08

(54) **THRUSTER PIG**
STOSSMOLCH
RACLEUR-PROPULSEUR

(30) Priority: 24.06.2004 NO 20042655
(43) Date of publication of application: 13.06.2007
(73) Proprietor: Statoil ASA, 4035 Stavanger (NO); Crawford Technical Services Inc., Lafayette LA 70508 (US)
(72) Inventor: KINNARI, Keijo, J., N-4050 Sola (NO); LABES-CARRIER, Catherine, N-4041 Hafrsfjord (NO); CRAWFORD, Jim, Bob, Lafayette, LA 70508 (US)
(74) Representative: Cronin, Brian Harold John
(86) International application number: PCT/NO2005/000223
(87) International publication number: WO 2006/001707

(56) References cited:
- US-A- 3 346 045
- US-B1- 6 194 622
- US-B1- 6 315 498
- US-B1- 6 651 744

## Description

### Field of the invention

The present invention relates to thruster pigs for servicing a pipeline, well or open hole to remove deposits or blocking in form of hydrates, ice, scale or debris, or for undertaking control or monitoring such as non-destructive examination. More particularly, the present invention relates to a thruster pig and a thruster pig system having a return flow line. Said thruster pig and thruster pig system, having said return flow line connected, can be urged further into a blocked or closed pipeline than prior art thruster pigs. The thruster pig system is particularly advantageous for hydrate plug removal in long subsea pipelines.

### Background of the invention and prior art

Pigs are currently available in many designs for many operations for diverse industries. Pigs can be passively flowing with the flow in the pipeline, without external connection, or the pig can be connected to, for example a line, a pipe or coiled tubing. The connection is usually arranged for withdrawing the pig. A description of pig technology can be found in the patent publication US 6,651,744 B1, which is considered the closest prior art to the present invention. Relevant background art is described in the patent publications US 6,315,498 B1; US 6,122,791; US 6,343,657 B1 and US 6260617 B1.

A thruster pig is urged into a pipe by pumping a fluid into the pipe at a location behind the pig such that the pig is pushed further into the pipe by said pressurized fluid. If the pipe bore is completely blocked with for example hydrates, only a thruster pig system with a return flow line or flow way is useful, since fluid ahead of the pig must be taken out to avoid pressure buildup against the blockage. Thruster pigs having a separate flow line connected have so far been designed with connections and flow line both for fluid flow delivery or return as well as for withdrawing both the coiled tubing and the connected pig. The separate flow line usually consists of coiled tubing.

The insertion and withdrawal of pigs connected to coiled tubing become more difficult as the injection length of the pig and coiled tubing increases, the number of bends increases, and the extent of horizontal or upwards sloping sections in the pipe increases. Such difficulties limit the usability of thruster pigs. A demand exists for expanding the usability of thruster pigs.

Particularly in the oil and gas industry the demand for pigging operations is significant. Severe problems are likely for long pipelines subsea at large depths in cold waters, for which problems with hydrate formation blocking the pipelines are likely, in addition to various deposits such as ice, wax and debris. The initially warm well fluid is cooled down by cold seawater, thereby inducing condensation, precipitation and hydrate formation. Hydrates can be melted with thermodynamic inhibitors such as MEG (glycol coolant) or methanol shifting the melting point of the hydrates to below the ambient temperature. In case of a shutdown or failure in the inhibitor injection system, severe blocking by hydrates is likely.

The obj ective of the present invention is to provide a thruster pig and a thruster pig system that meet the above identified demand.

### Summary of the invention

In agreement with the objective of the invention, a thruster pig is provided, for sending through a pipe from an entrance facility to a receiving location, for servicing or monitoring, by pumping a thrusting fluid into the pipe to force the pig forwards into the pipe, said thruster pig comprising:
a body having a front end and a back end, which back end includes a reaction surface to which said thrusting fluid applies a motive force, said body having a diameter slightly smaller than the inner diameter of the pipe,
a seal circumferentially arranged on the pig to seal between said body and said pipe,
a connector for releasable connection of a return flow line to the pig, said connector including a shifting mandrel that is activated to open the connector by pumping a ball through the return flow line, said ball being retained in the return flow line after opening the connector,
a blanking device arranged to blank a bore left through the pig body as the return flow line is disconnected;
such that said thruster pig and any connected servicing or monitoring equipment is operable by pumping a fluid into the annulus between the pipe and the return flow line while returning fluid through said return flow line as required to maintain a differential pressure over said pig to urge said pig forwards through the pipe, while at any point said return flow line can be disconnected from the pig and retrieved to the entrance end and the blanked pig can be urged forwards to a pig receiving location by pumping or directing fluid into the pipe.

The term pipe designates any pipe, pipeline, aperture, channel, well or open bore hole of relatively uniform cross section. The term ball means a ball, a cylinder, or any object that can be transported down the return flow line to open the connection, said ball being retained in the return flow line. With servicing it is meant removal of any hydrates, ice, scale, wax or solid debris by integrating and using appropriate equipment or tools of prior art design. With monitoring it is meant for example wall thickness measurements with ultrasound or electromagnetic equipment, or examination for crack detection, by integrating and using prior art equipment. Preferably, said equipment is modular, comprising for example power module, sensor module and data storage module, such that long cables are avoided and data can be collected when the pig has been retrieved from a pig receiving location. The thrusting fluid conveniently comprises coolant to melt hydrates and ice at ambient pipe conditions, such that a separate coolant line is omissible. Coolant is in this context considered to mean any glycol, methanol or other inhibitor or coolant or mixture thereof with hydrocarbons, water or other liquid, providing capability for melting hydrates and ice at ambient pipe conditions. The pig body is slightly smaller than the smallest pipe dimension, as the seal provides large flexibility with respect to diameter variation in addition to increased reaction surface for the thrusting fluid.

The return flow line may consist of any pipe or sections of pipes, rigid or flexible as convenient. However, the return flow line preferably consists of coiled tubing, which means tubing of metal, composites, reinforced polymers or any material and design providing capability of winding the tubing on a spool, which spool preferably includes a spool drive. Preferably the coiled tubing is dimensioned for retrieval without the pig connected. This provides for saving of significant costs because the coiled tubing for a particular utilization can be of a lighter and weaker design with respect to stress applied in the longitudinal direction. The maximum length the pig can be injected by thrusting into a particular pipeline is also increased since a longer length of coiled tubing can be retrieved.

The thruster pig of the invention preferably is comprising a blanking device in form of a blanking plug arranged to be set when the shifting mandrel is activated, more preferably a blanking plug with an external fishing neck, to facilitate retrieval by a fishing tool. Thereby enlarged reaction surface area and motive force is also achieved. Further, the thruster pig may advantageously comprise a blanking plug that is milled almost flat to allow circulation when in place, such that circulation can pass in either direction until the blanking plug is activated.

Preferably the thruster pig of the invention comprises a hydrate removal tool, in form of channels for coolant to nozzles at the front end of the pig, to jet the inner surface and interior of the pipe in front of the pig, wherein channels at an adjustable set pressure opens to pass coolant from the back end of the pig through the pig to nozzles jetting the surface and interior of the pipeline in front of the pig with coolant. Thereby the thrusting fluid preferably comprises coolant, such that a separate coolant line is unnecessary. Fluid comprising coolant, pieces of hydrates and debris, etc, from ahead of the pig, is retrieved as return flow by the return flow line. Means are preferably arranged for control of the return fluid composition, i.e. to control that the coolant contents is sufficient to avoid hydrate or ice formation. Said means can be instrumentation, a sample collection facility or for example a spool piece with window for visual inspection.

A pump is preferably installed topsides in or near the end of the return flow line, to pump out fluid from said return flow line in order to achieve an appropriate differential pressure between the fluid pumped into the annulus behind the pig and the fluid ahead of the pig, thereby controlling the urging of the pig through the pipe. Equipment for pressure control is preferably arranged, in form of a differential pressure transmitter providing signal for differential pressure between the return flow line and the annulus to a pressure controller controlling the operational pressure of the pumps connected to the annulus and return flow line, respectively. Hence, the control of the motive force and displacement is improved.

For a blocked pipe, the pig can be pushed out of the pipe by reversing the flow by pumping fluid into the return flow line, said fluid applying force on a reaction surface on the front end of the pig, and optionally helped by carefully tensioning the return flow line.

The above mentioned pressure control, possible way of taking the pig out by reverse flow or fishing operations, and the normal disconnection of the coiled tubing, results in that the apertures or passage ways as defined in (b) and (c) of claim 1 and (b), (c), and (f) of claim 13 of the nearest prior art US 6,651,744 B1 no longer are obligatory, resulting in a simpler and therefore more reliable pig.

However, the thruster pig of the invention may include apertures, opening at a preset adjustable pressure, arranged between volumes of different operating pressure, preferably of a two way design as described in US 6,651,744 B1. Preferably an aperture is provided also in between the coiled tubing and the surrounding annulus. Thereby increased protection against excessive pressure is provided for equipment and pipe.

With the present invention also a thruster pig system is provided, for sending a pig through a subsea pipe from an entrance facility to a receiving location, for hydrate removal, by pumping a thrusting fluid into the pipe to force the pig forwards into the pipe while hydrate removal is undertaken continuously or intermittently, said thruster pig system comprising:
a pump for pumping thrusting fluid,
a return flow line, including means for handling,
a working platform or vessel on the surface,
a tube having means and length for connecting said tube from said platform to said pipe, for sending a thruster pig having a return flow line connected into the tube from the platform to said pipe, said thruster pig comprising:
   a body having a front end and a back end, which back end includes a reaction surface to which said thrusting fluid applies a motive force, said body having a diameter slightly smaller than the inner diameter of the pipe and tube,
   a seal circumferentially arranged on the pig to seal between said body and said pipe,
   a hydrate removal tool, in form of channels for inhibitor to nozzles at the front end of the pig, arranged to jet the inner surface and interior of the pipe in front of the pig,
   a connector for releasable connection of the return flow line to the pig, said connector including a shifting mandrel that is activated to open the connector by pumping a ball down the return flow line, said ball being retained in the return flow line after opening the connector,
   a blanking device arranged to blank a bore left through the pig as the return flow line is disconnected;
such that said thruster pig is operable by pumping said thrusting fluid into the annulus between the tube and the return flow line while returning fluid through said return flow line as required to maintain a differential pressure over said pig to urge said pig forwards, while at any point said return flow line can be disconnected from the pig and retrieved to the platform and the blanked pig can be urged forwards to a pig receiving location by pumping or directing fluid into the pipe.

The thrusting fluid is preferably MEG or methanol, hence a separate coolant pipe is avoided.

The return flow line preferably consists of coiled tubing arranged onto one single spool or several spools of connectable lengths, with an integrated spool drive dimensioned to retrieve the full length of injected coiled tubing when the pig is disconnected.

The thruster pig system with coiled tubing is the most preferred embodiment of the present invention. The construction results in significant cost savings due to reduced weight of coiled tubing, and lighter spool drive system (for example hydraulic constant tension) and dimensioning topsides, in addition to improved operability and lowered risk.

The distinguishing features of the present invention over prior art include omission of obligatory apertures or passageways through the pig; the connector that is releasable by pumping a ball or similar down the coiled tubing, thereby opening the connector while said ball is retained in the coiled tubing; the blanking device; the return flow line and associated equipment with weaker dimensioning; the means for pressure control and the means for return fluid control.

### Brief description of the drawing

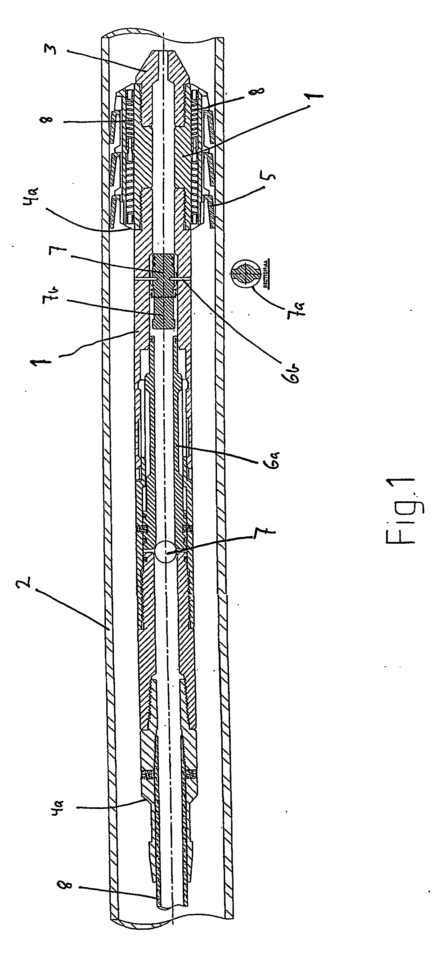

Fig. 1 is an illustration of an embodiment of a thruster pig according to the present invention.

### Detailed description of the invention

Reference is made to Fig. 1 that is an illustration of an embodiment of a thruster pig according to the present invention.

The thruster pig 1 is illustrated in a longitudinal section into a pipeline 2. The thruster pig has a body with a front end 3 and a back end 4, which back end includes reaction surfaces 4a to which thrusting fluid applies a motive force. The body has a diameter slightly smaller than the inner diameter of the pipe. The thruster pig includes seals 5 circumferentially arranged on the pig to seal between said body and said pipe. In the illustrated embodiment three seals are arranged. Further, the thruster pig includes a connector 6 for releasable connection of a return flow line in form of coiled tubing 8 to the pig, said connector including a shifting mandrel 6a that is activated to open the connector by pumping a ball 7 through the coiled tubing such that said ball is retained in the coiled tubing after opening the connector. The line of disconnection is designated with reference numeral 6b. Further, the thruster pig includes a blanking device 7 arranged to blank a bore left as the coiled tubing is disconnected. Fig. 1 also includes a cross-section 7a of the blanking device, viewed as indicated by A-A on the drawing. When pumping in the ball 7, the ball engages at the illustrated location and the fluid within the coiled tubing pushes the shifting mandrel forwards thus activating the disconnection to disconnect the coiled tubing at the line of disconnection at the blanking plug. The ball is retained at the engagement location by a retaining means (not illustrated) blocking the further passage of the ball and designed such that the ball in position can apply a pressure on the shifting mandrel when fluid is pumped into the coiled tubing. At an adjustable differential pressure of for example 5 bar over the ball the disconnection is made. The blanking device and connection are interconnected such that the blanking plug cannot be set before the disconnection has been made. Upon disconnection the blanking device is set and the bore as indicated by the view A-A on the drawing is blocked, for example by a spring back action as the connection is disconnected. A fishing neck 7b will be left exposed after disconnecting the coiled tubing, such that in case a fishing operation contrary to what is expected ever should be required, said fishing operation is facilitated.

Also illustrated on Fig. 1 are channels 8, through which channels thrusting fluid including inhibitor can be directed. The actual bores and nozzles for jetting the inner surface and interior of the pipe in front of the pig are not necessarily as illustrated on the figure, the illustrated channels are apertures opening at a preset, adjustable pressure, arranged between the front and back ends of the pig, similar to the ones described and illustrated in the patent publication US 6,651,744 B1.

## Claims

1. Thruster pig (1) for sending through a pipe (2) from an entrance facility to a receiving location, for servicing or monitoring, by pumping a thrusting fluid into the pipe to force the pig forwards into the pipe, said thruster pig comprising:
a body having a front end (3) and a back end (4), which back end includes a reaction surface (4a) to which said thrusting fluid applies a motive force, said body having a diameter slightly smaller than the inner diameter of the pipe,
a seal (5) circumferentially arranged on the pig to seal between said body and said pipe,
a connector (6) for releasable connection of a return flow line to the pig, such that said thruster pig and any connected servicing or monitoring equipment is operable by pumping a fluid into the annulus between the pipe and the return flow line while returning fluid through said return flow line as required to maintain a differential pressure over said pig to urge said pig forwards through the pipe, while at any point said return flow line can be disconnected from the pig and retrieved to the entrance end **characterised in that** said connector includes a shifting mandrel (6a) that is activated to open the connector by pumping a ball through the return flow line, said ball being retained in the return flow line after opening the connector,
a blanking device (7) arranged to blank a bore left through the pig as the return flow line is disconnected;
and whereby the blanked pig can be urged forwards to a pig receiving location by pumping or directing fluid into the pipe.

2. Thruster pig of claim 1, wherein the return flow line consists of coiled tubing.

3. Thruster pig of claim 1, comprising a blanking device in form of a blanking plug arranged to be set when the shifting mandrel is activated.

4. Thruster pig of claim 1, comprising a blanking plug with an external fishing neck (76), to facilitate retrieval by a fishing tool.

5. Thruster pig of claim 1, wherein the blanking plug is milled almost flat to allow circulation when in place.

6. Thruster pig of claim 1, comprising a hydrate removal tool, in form of at least one channel for coolant to nozzles at the front end of the pig, to jet the inner surface and interior of the pipe in front of the pig.

7. Thruster pig of claim 2, wherein the coiled tubing is dimensioned for retrieval without the pig connected.

8. Thruster pig of claim 1, wherein a pump is installed in or near the end of the return flow line, to pump out fluid from said return flow line in order to achieve an appropriate differential pressure between the fluid pumped into the annulus behind the pig and the fluid ahead of the pig, thereby controlling the urging of the pig through the pipe.

9. Thruster pig of claim 6, wherein equipment for pressure control is arranged, in form of a differential pressure transmitter providing signal for differential pressure between the return flow line and the annulus to a pressure controller controlling the operational pressure of the pumps connected to the annulus and return flow line, respectively.

10. Thruster pig of claim 1, wherein one or more apertures opening at a preset, adjustable pressure are arranged between volumes of different operating pressure.

11. Thruster pig of claim 1, wherein means are arranged for control of the return fluid composition.

12. Thruster pig system for sending a pig (1) through a subsea pipe (2) from an entrance facility to a receiving location, for hydrate removal, by pumping a thrusting fluid into the pipe to force the pig forwards into the pipe while hydrate removal is undertaken continuously or intermittently, said thruster pig system comprising:
a pump for pumping thrusting fluid,
a return flow line, including means for handling,
a working platform or vessel on the surface,
a tube having means and length for connecting said tube from said platform to said pipe, for sending a pig having a return flow line connected into the tube from the platform to said pipe, said pig comprising:
a body having a front end (3) and a back end (4), which back end includes a reaction surface (4a) to which said thrusting fluid applies a motive force, said body having a diameter slightly smaller than the inner diameter of the pipe and tube,
a seal (5) circumferentially arranged on the pig to seal between said body and said pipe,
a hydrate removal tool, in form of channels for coolant to nozzles at the front end of the pig, arranged to jet the inner surface and interior of the pipe in front of the pig,
a connector for releasable connection of the return flow line to the pig, such that said thruster pig is operable by pumping said thrusting fluid into the annulus between the tube and the return flow line while returning fluid through said return flow line as required to maintain a differential pressure over said pig to urge said pig forwards, while at any point said return flow line can be disconnected from the pig and retrieved to the platform **characterised in that** said connector includes shifting mandrel (6a) that is activated to open the connector by pumping a ball down the return flow line, said ball being retained in the return flow line after opening the connector,
a blanking device (7) arranged to blank a bore left through the pig as the return flow line is disconnected; and whereby the blanked pig can be urged forwards to a pig receiving location by pumping or directing fluid into the pipe.

13. Thruster pig system according to claim 12, wherein said thrusting fluid is MEG or methanol.

14. Thruster pig system according to claim 12, wherein one or more channels at an adjustable set pressure opens to pass coolant from the back end through the pig to nozzles jetting the surface and interior of the pipeline in front of the pig with coolant.

15. Thruster pig system according to claim 12, wherein the return flow line includes means to control the contents of coolant in the return flow.

16. Thruster pig system according to claim 12, wherein the return flow line consists of coiled tubing arranged onto one single spool or several spools of connectable lengths, with an integrated spool drive dimensioned to retrieve the full length of injected coiled tubing when the pig is disconnected.

## Patentansprüche

1. Stoßmolch (1) zum Durchlauf durch ein Rohr (2) von einer Eintrittsstelle zu einem Aufnahmeort zur Wartung oder Überwachung durch Pumpen eines eine Kraft in Längsrichtung ausübenden Fluids in das Rohr, um den Molch in dem Rohr zwangsweise voranzutreiben, wobei der Stoßmolch einen Körper mit einem vorderseitigen Ende (3) und mit einem rückseitigen Ende (4), wobei das rückseitige Ende eine Wechselwirkungsoberfläche (4a) aufweist, auf die das eine Kraft in Längsrichtung ausübende Fluid eine antreibende Kraft ausübt, wobei der Körper mit einem Durchmesser ausgebildet ist, der geringfügig kleiner als der Innendurchmesser des Rohres ist, eine Dichtungsanordnung (5), die umfänglich an dem Molch angebracht ist, um zwischen dem Körper und dem Rohr abzudichten, und eine Anschlussanordnung (6) zum lösbaren Anschließen einer Rückflussleitung an den Molch aufweist, so dass der Stoßmolch und jegliche angeschlossene Wartungs- oder Überwachungsausrüstung durch Pumpen eines Fluids in den Ringraum zwischen dem Rohr und der Rückflussleitung betriebsbereit ist, während Fluid durch die Rückflussleitung in dem Maß zurückfließt, wie es erforderlich ist, um einen Differentialdruck über dem Molch aufrechtzuerhalten, um den Molch zwangsweise durch das Rohr nach vorne zu bewegen, wobei an jedem Punkt die Rückflussleitung von dem Molch getrennt und an der Eingangsstelle geborgen werden kann, **dadurch gekennzeichnet, dass** die Anschlussanordnung einen Schiebedorn (6a) aufweist, der betätigt wird, um die Anschlussanordnung durch Pumpen einer Kugel durch die Rückflussleitung zu öffnen, wobei die Kugel in der Rückflussleitung nach Öffnen der Anschlussanordnung zurückgehalten wird, dass eine Verschlussvorrichtung (7) dazu eingerichtet ist, eine in dem Molch nach Abtrennen in der Rückflussleitung verbleibende Öffnung zu verschließen, und dass der verschlossene Molch durch Pumpen oder Einleiten von Fluid in das Rohr zwangsweise zu einem Molchaufnahmeort nach vorne bewegt werden kann.

2. Stoßmolch nach Anspruch 1, bei dem die Rückflussleitung aus einem gewendelten Rohr besteht.

3. Stoßmolch nach Anspruch 1 mit einer Verschlussvorrichtung in Gestalt eines Verschlussstopfens, der dazu eingerichtet ist, gesetzt zu werden, wenn der Schiebedorn aktiviert ist.

4. Stoßmolch nach Anspruch 1, der einen Verschlussstopfen mit einem äußeren Zugriffshalsstück (7b) aufweist, um das Bergen mit einem Zugriffswerkzeug zu vereinfachen.

5. Stoßmolch nach Anspruch 1, bei dem der Verschlussstopfen im Wesentlichen flach gewalzt ist, um eine Drehung am Einsatzort zu gestatten.

6. Stoßmolch nach Anspruch 1, der ein Entfernungswerkzeug für wasserhaltige Substanzen in Gestalt wenigstens eines Kanals für Kühlmittel zu Düsen an dem vorderseitigen Ende des Molches aufweist, um die innere Oberfläche und den Innenraum des Rohres vorderseitig des Molches auszuspritzen.

7. Stoßmolch nach Anspruch 2, bei dem das gewendelte Rohr zum Bergen ohne den angeschlossenen Molch dimensioniert ist.

8. Stoßmolch nach Anspruch 1, bei dem in oder nahe des Endes der Rückflussleitung eine Pumpe installiert ist, um aus der Rückflussleitung Fluid auszupumpen, um einen passenden Differentialdruck zwischen dem in den Ringraum hinter dem Molch eingepumptem Fluid und dem Fluid an der Vorderseite des Molches zu erhalten, um damit die zwangsweise Bewegung des Molches durch das Rohr zu steuern.

9. Stoßmolch nach Anspruch 6, bei dem eine Ausrüstung für eine Druckkontrolle in Gestalt eines Differentialdruckvermittlers vorhanden ist, der ein Signal für einen Differentialdruck zwischen der Rückflussleitung und dem Ringraum zu einer Drucksteuereinheit bereitstellt, die den Betriebsdruck der jeweils mit dem Ringraum und mit der Rückflussleitung verbundenen Pumpen kontrolliert.

10. Stoßmolch nach Anspruch 1, bei dem zwischen Volumina mit unterschiedlichen Betriebsdrücken eine oder mehrere Öffnungen ausgebildet sind, die bei einem vorbestimmten, einstellbaren Druck öffnen.

11. Stoßmolch nach Anspruch 1, bei dem Mittel zum Kontrollieren der Zusammensetzung des rücklaufenden Fluids vorhanden sind.

12. Stoßmolcheinrichtung zum Durchlauf eines Molches durch ein Unterwasserrohr (2) von einer Eintrittsstelle zu einem Aufnahmeort zur Entfernung von wasserhaltigen Substanzen durch Pumpen eines eine Kraft in Längsrichtung ausübenden Fluids in das Rohr, um den Molch in dem Rohr zwangsweise voranzutreiben, während die Entfernung von wasserhaltigen Substanzen kontinuierlich oder intermittierend vorgenommen wird, wobei die Stoßmolcheinrichtung eine Pumpe zum Pumpen von eine Kraft in Längsrichtung ausübendem Fluid, eine Rückflussleitung einschließlich Handhabungsmittel, eine Arbeitsplattform oder ein Seefahrzeug an der Oberfläche, eine Röhre mit Mitteln und einer Länge zum Verbinden der Röhre von der Plattform mit dem Rohr und zum Durchlauf eines Molches von der Plattform zu dem Rohr aufweist, der über eine Rückflussleitung verfügt, die an der Röhre angeschlossen ist, wobei der Molch einen Körper mit einem vorderseitigen Ende (3) und mit einem rückseitigen Ende (4), wobei das rückseitige Ende eine Wechselwirkungsoberfläche (4a) aufweist, auf die das eine Kraft in Längsrichtung ausübende Fluid eine antreibende Kraft ausübt, wobei der Körper mit einem Durchmesser ausgebildet ist, der geringfügig kleiner als der Innendurchmesser des Rohres ist, eine Dichtungsanordnung (5), die umfänglich an dem Molch angebracht ist, um zwischen dem Körper und dem Rohr abzudichten, und ein Entfernungswerkzeug für wasserhaltige Substanzen in Gestalt wenigstens eines Kanals für Kühlmittel zu Düsen an dem vorderseitigen Ende des Molches, um die innere Oberfläche und den Innenraum des Rohres vorderseitig des Molches auszuspritzen, und eine Anschlussanordnung (6) zum lösbaren Anschließen einer Rückflussleitung an dem Molch aufweist, so dass der Stoßmolch und jegliche angeschlossene Wartungs- oder Überwachungsausrüstung durch Pumpen eines Fluids in den Ringraum zwischen dem Rohr und der Rückflussleitung betriebsbereit ist, während Fluid durch die Rückflussleitung in dem Maß zurückfließt, wie es erforderlich ist, um einen Differentialdruck über dem Molch aufrechtzuerhalten, um den Molch zwangsweise durch das Rohr nach vorne zu bewegen, wobei an jedem Punkt die Rückflussleitung von dem Molch getrennt und an der Eingangsstelle geborgen werden kann, **dadurch gekennzeichnet, dass** die Anschlussanordnung einen Schiebedorn (6a) aufweist, der betätigt wird, um die Anschlussanordnung durch Pumpen einer Kugel durch die Rückflussleitung zu öffnen, wobei die Kugel in der Rückflussleitung nach Öffnen der Anschlussanordnung zurückgehalten wird, dass eine Verschlussvorrichtung (7) dazu eingerichtet ist, eine in dem Molch nach Abtrennen in der Rückflussleitung verbleibende Öffnung zu verschließen, und dass der verschlossene Molch durch Pumpen oder Einleiten von Fluid in das Rohr zwangsweise zu einem Molchaufnahmeort nach vorne bewegt werden kann.

13. Stoßmolcheinrichtung nach Anspruch 12, wobei das eine Kraft in Längsrichtung ausübende Fluid MEG oder Methanol ist.

14. Stoßmolcheinrichtung nach Anspruch 12, bei dem sich eine oder mehrere Kanäle bei einem einstellbaren gesetzten Druck öffnen, um Kühlmittel von dem rückseitigen Ende durch den Molch zu Düsen zu leiten, die die Oberfläche und den Innenraum der Pipeline vor dem Molch mit Kühlmittel ausspritzen.

15. Stoßmolcheinrichtung nach Anspruch 12, bei dem die Rückflussleitung Mittel zum Kontrollieren der Anteile an Kühlmittel in dem Rückfluss umfassen.

16. Stoßmolcheinrichtung nach Anspruch 12, bei der die Rückflussleitung aus einem gewendelten Rohr besteht, das auf eine einzige Spule oder mehrere Spulen miteinander verbindbarer Längen mit einem integrierten Spulenantrieb angeordnet ist, der zum Bergen der gesamten Länge von eingefahrener gewendelter Leitung eingerichtet ist, wenn der Molch abgetrennt ist.

## Revendications

1. Racleur-propulseur (1) à envoyer dans un tuyau (2), depuis un dispositif d'entrée vers un emplacement de réception, à des fins d'entretien ou de contrôle, en pompant un fluide de poussée dans le tuyau pour forcer le racleur à avancer dans le tuyau, ledit racleur-propulseur comprenant :
un corps ayant une extrémité avant (3) et une extrémité arrière (4), laquelle extrémité arrière comporte une surface de réaction (4a) sur laquelle ledit fluide de poussée applique une force motrice, ledit corps ayant un diamètre légèrement inférieur au diamètre interne du tuyau,
un joint d'étanchéité (5) agencé périphériquement sur le racleur pour assurer l'étanchéité entre ledit corps et ledit tuyau,
un raccord (6) pour la liaison de façon amovible d'une conduite d'écoulement de retour au racleur de telle façon que ledit racleur-propulseur et
tout équipement d'entretien ou de contrôle raccordé puissent fonctionner en pompant un fluide dans l'espace annulaire entre le tuyau et la conduite d'écoulement de retour tout en renvoyant du fluide à travers ladite conduite d'écoulement de retour de la manière souhaitée pour maintenir une pression différentielle sur ledit racleur pour pousser ledit racleur à travers le tuyau, tandis que, en tout point, ladite conduite d'écoulement de retour peut être séparée du racleur et récupérée à l'extrémité d'entrée, **caractérisé en ce que** ledit raccord comporte un mandrin à déplacement (6a) qui est actionné pour ouvrir le raccord en pompant une bille à travers la conduite d'écoulement de retour, ladite bille étant retenue dans la conduite d'écoulement de retour après ouverture du raccord,
un dispositif d'obturation (7) agencé pour obturer un passage laissé à travers le racleur lorsque la conduite d'écoulement de retour est séparée ;
et grâce à quoi le racleur obturé peut être poussé vers un emplacement de réception du racleur en pompant ou en dirigeant le fluide dans le tuyau.

2. Racleur-propulseur de la revendication 1, dans lequel la conduite d'écoulement de retour consiste en une tubulure spiralée.

3. Racleur-propulseur de la revendication 1, comprenant un dispositif d'obturation sous la forme d'un bouchon d'obturation agencé pour être positionné quand le mandrin à déplacement est actionné.

4. Racleur-propulseur de la revendication 1, comprenant un bouchon d'obturation avec un collet de repêchage externe (7b) pour faciliter la récupération par un outil de repêchage.

5. Racleur-propulseur de la revendication 1, dans lequel le bouchon d'obturation est usiné presque plat pour permettre la circulation quand il est en place.

6. Racleur-propulseur de la revendication 1, comprenant un outil d'élimination des hydrates, sous la forme d'au moins un canal pour un réfrigérant vers des buses au niveau de l'extrémité avant du racleur, pour nettoyer au jet la surface interne et l'intérieur du tuyau devant le racleur.

7. Racleur-propulseur de la revendication 2, dans lequel la tubulure spiralée est dimensionnée pour la récupération sans le racleur raccordé.

8. Racleur-propulseur de la revendication 1, dans lequel une pompe est installée dans ou proche de l'extrémité de la conduite d'écoulement de retour, pour évacuer le fluide de ladite conduite d'écoulement de retour de façon à obtenir une pression différentielle appropriée entre le fluide pompé dans l'espace annulaire derrière le racleur et le fluide devant le racleur, en commandant ainsi la poussée du racleur à travers le tuyau.

9. Racleur-propulseur de la revendication 6, dans lequel l'équipement pour la commande de pression est agencé sous forme d'un transmetteur de pression différentielle fournissant un signal de pression différentielle entre la conduite d'écoulement de retour et l'espace annulaire à un dispositif de commande de pression commandant la pression fonctionnelle des pompes reliées à l'espace annulaire et à la ligne d'écoulement de retour, respectivement.

10. Racleur-propulseur de la revendication 1, dans lequel une ou plusieurs ouvertures, s'ouvrant à une pression réglable prédéterminée, sont agencées entre des volumes de pression de fonctionnement différente.

11. Racleur-propulseur de la revendication 1, dans lequel des moyens sont agencés pour commander la composition fluidique de retour.

12. Système de racleur-propulseur pour envoyer un racleur (1) à travers un tuyau sous-marin (2) depuis un dispositif d'entrée vers un emplacement de réception, pour éliminer les hydrates, en pompant un fluide de poussée dans le tuyau pour forcer le racleur à avancer dans le tuyau tandis que l'élimination des hydrates est entreprise de façon continue ou intermittente, ledit système de racleur-propulseur comprenant :
une pompe pour pomper un fluide de poussée,
une conduite d'écoulement de retour, incluant des moyens de manutention,
une plate-forme d'exploitation ou un navire en surface,
un tube ayant des moyens et une longueur pour relier ledit tube depuis ladite plate-forme jusqu'audit tuyau, pour envoyer un racleur ayant une conduite d'écoulement de retour raccordée dans le tube de la plate-forme audit tuyau, ledit racleur comprenant :
un corps ayant une extrémité avant (3) et une extrémité arrière (4), laquelle extrémité arrière comporte une surface de réaction (4a) sur laquelle ledit fluide de poussée applique une force motrice, ledit corps ayant un diamètre légèrement inférieur au diamètre interne du tuyau et du tube,
un joint d'étanchéité (5) agencé périphériquement sur le racleur pour assurer l'étanchéité entre ledit corps et ledit tuyau,
un outil d'élimination des hydrates, sous forme de canaux pour un réfrigérant vers des buses au niveau de l'extrémité avant du racleur, agencés pour nettoyer au jet la surface interne et l'intérieur du tuyau devant le racleur,
un raccord pour la liaison de façon amovible de la conduite d'écoulement de retour au racleur de telle façon que ledit racleur-propulseur soit opérationnel en pompant ledit fluide de poussée dans l'espace annulaire entre le tube et la conduite d'écoulement de retour tout en renvoyant le fluide à travers ladite conduite d'écoulement de retour de la manière souhaitée pour maintenir une pression différentielle sur ledit racleur pour pousser ledit racleur, tandis que, en tout point, ladite conduite d'écoulement de retour peut être séparée du racleur et récupérée vers la plate-forme, **caractérisé en ce que** ledit raccord comporte un mandrin à déplacement (6a) qui est actionné pour ouvrir le raccord en pompant une bille le long de la conduite d'écoulement de retour, ladite bille étant retenue dans la conduite d'écoulement de retour après ouverture du raccord,
un dispositif d'obturation (7) agencé pour obturer un passage laissé par le racleur lorsque la conduite d'écoulement de retour est séparée ; et grâce à quoi le racleur obturé peut être poussé vers un emplacement de réception du racleur en pompant ou en dirigeant le fluide dans le tuyau.

13. Système de racleur-propulseur selon la revendication 12, dans lequel ledit fluide de poussée est du MEG ou du méthanol.

14. Système de racleur-propulseur selon la revendication 12, dans lequel un ou plusieurs canaux à une pression prédéterminée réglable s'ouvre pour laisser passer du réfrigérant depuis l'extrémité arrière à travers le racleur vers les buses en nettoyant au jet la surface et l'intérieur du pipeline devant le racleur avec le réfrigérant.

15. Système de racleur-propulseur selon la revendication 12, dans lequel la conduite d'écoulement de retour comporte des moyens pour commander la teneur du réfrigérant dans l'écoulement de retour.

16. Système de racleur-propulseur selon la revendication 12, dans lequel la conduite d'écoulement de retour consiste en une tubulure spiralée agencée sur un tambour unique ou plusieurs tambours de longueurs raccordables, avec un dispositif d'entraînement du ou des tambours intégré pour récupérer la longueur totale de la tubulure spiralée injectée quand le racleur est séparé.
